Europäisches Patentamt

European Patent Office

Office européen des brevets

(11) Numéro de publication: **0 199 626**
**B1**

(12) **FASCICULE DE BREVET EUROPEEN**

(45) Date de publication du fascicule du brevet:
23.05.90

(51) Int. Cl.⁵: **G01S 13/80,** G01S 13/78

(21) Numéro de dépôt: 86400740.6

(22) Date de dépôt: 07.04.86

(54) Procédé et dispositif de limitation de trafic pour système interrogateur/répondeur tel qu'un radar secondaire ou système IFF.

(30) Priorité: 09.04.85 FR 8505335

(43) Date de publication de la demande:
29.10.86 Bulletin 86/44

(45) Mention de la délivrance du brevet:
23.05.90 Bulletin 90/21

(84) Etats contractants désignés:
DE GB IT NL

(56) Documents cités:
FR-A- 2 407 487
US-A- 2 923 935
US-A- 3 875 570

(73) Titulaire: LMT RADIO PROFESSIONNELLE, 46-47, Quai Alphonse Le Gallo, F-92103 Boulogne-Billancourt(FR)

(72) Inventeur: Panisset, Daniel, THOMSON-CSF SCPI 19, avenue de Messine, F-75008 Paris(FR)
Inventeur: Loaec, Alain, THOMSON-CSF SCPI 19, avenue de Messine, F-75008 Paris(FR)

(74) Mandataire: Chaverneff, Vladimir et al, THOMSON-CSF SCPI, F-92045 PARIS LA DEFENSE CEDEX 67(FR)

ACTORUM AG

## Description

La présente invention se rapporte à un procédé et à un dispositif de limitation de trafic pour système interrogateur/répondeur tel qu'un radar secondaire ou système IFF.

Dans un système interrogateur/répondeur, une plateforme mobile porteuse d'un transpondeur peut être interrogée au même moment par un certain nombre d'interrogateurs basés au sol ou sur d'autres plateformes. Si le nombre d'interrogations se produisant en un court laps de temps est trop important, elles perdent leur intelligibilité par interférences mutuelles, et les réponses trop nombreuses surchargent l'émetteur du transpondeur.

Selon l'art antérieur, ce problème est résolu en désensibilisant le récepteur du transpondeur par un moyen analogue à un contrôle de gain automatique, de manière à éliminer des interrogations selon un critère de niveau de réception, les plus faibles étant supposées provenir des interrogateurs les plus lointains, donc les moins concernés par la présence de la plateforme mobile dans leur secteur de surveillance.

On connaît d'après le document US-A 3 875 570 un système adaptatif indicateur de proximité pour interrogateurs radars secondaires, cependant ce système n'a pas pour but de limiter le trafic, mais de déterminer la densité du trafic pour optimiser le fonctionnement du dispositif d'indication de proximité.

D'autre part, on connaît d'après le document US-A 2 923 935 un système de limitation de trafic pour transpondeurs-balises radio, mais la limitation s'exerce sur l'émetteur des balises.

La présente invention a pour objet un procédé et un dispositif de limitation de trafic ne limitant ce trafic qu'en périodes de pointe.

Le procédé de limitation de trafic conforme à l'invention pour un système interrogateur/répondeur, tel qu'un radar secondaire ou un système IFF, dans lequel la limitation du nombre des interrogations prises en compte dans le répondeur est effectuée selon des critères de distribution statistique temporelle, la limitation consistant à compter pendant un intervalle de temps (Ti) de durée déterminée (T), le nombre (Ni) d'interrogations parvenant au répondeur, est caractérisé en ce que ledit nombre (Ni) est comparé pendant tout l'intervalle de temps (Ti), et avec une périodicité (t), à une valeur de critère (KT) et en ce que les impulsions incidentes sont bloquées jusqu'à la fin de l'intervalle de temps (Ti) dès que ledit nombre (Ni) a atteint la valeur de critère (KT).

Le dispositif de mise en œuvre du procédé de l'invention pour un système interrogateur/répondeur tel qu'un radar secondaire ou système IFF, ce dispositif comportant une porte d'entrée à fonction ET, agencée pour recevoir sur une de ses entrées des impulsions représentatives des interrogations parvenant au répondeur, la sortie de cette porte étant reliée d'une part à un compteur, est caractérisé en ce que la sortie de ladite porte est d'autre part reliée à une sortie d'autorisation de prise en compte d'interrogations, et en ce que le compteur possède une sortie reliée d'une part à un additionneur lui-même relié par ailleurs à une mémoire stockant au moins une valeur de critère, et d'autre part à une première entrée d'un comparateur, la sortie de l'additionneur étant reliée à un premier dispositif de mémorisation d'au moins une valeur de consigne liée à la valeur de critère dont la sortie est reliée à une deuxième entrée dudit comparateur, la sortie de ce comparateur étant reliée via un deuxième dispositif de mémorisation à une deuxième entrée de ladite porte ET.

La présente invention sera mieux comprise à la lecture de la description détaillée de plusieurs modes de réalisation, pris comme exemples non limitatifs, et illustrée par le dessin annexé, sur lequel:

– la figure 1 est un bloc diagramme d'un dispositif de limitation de trafic conforme à l'invention;
– les figures 2 à 5 sont des blocs diagrammes de modes de réalisation perfectionnés du dispositif de la figure 1, et
– la figure 6 est un bloc diagramme d'une variante du dispositif de la figure 1.

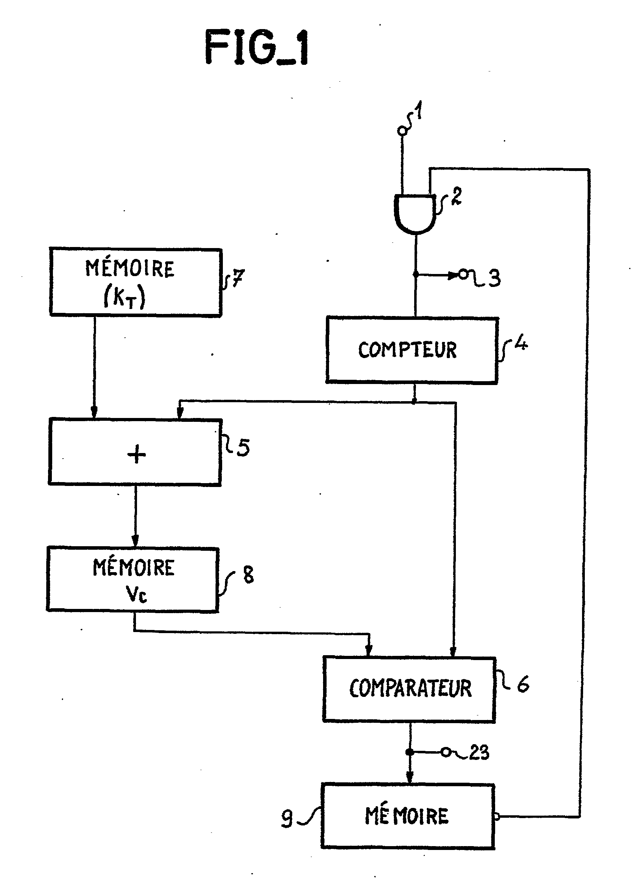

Le dispositif de limitation de trafic représenté sur la figure 1 reçoit sur sa borne d'entrée 1 des impulsions correspondant chacune à une interrogation parvenant au transpondeur (non représenté) dans lequel est logé le dispositif de l'invention. Ce transpondeur fait partie d'un système d'interrogation/réponse tel qu'un radar secondaire ou un système IFF. La borne 1 est reliée à une première entrée d'une porte ET référencée 2. La sortie de la porte 2 est reliée à une borne de sortie 3 et à l'entrée de comptage d'un compteur 4. Sur la borne 3 apparaissent les signaux de validation produits par le dispositif de l'invention, de la façon expliquée ci-dessous, ces signaux autorisant le transpondeur à accepter les demandes des interrogateurs concernés. Il est toutefois bien entendu que l'on pourrait tout aussi bien produire sur la borne 3 un signal d'inhibition, en insérant un inverseur juste en amont.

La sortie du compteur 4 est reliée d'une part à une première entrée d'un additionneur 5, et d'autre part à une première entrée d'un comparateur 6. La deuxième entrée de l'additionneur 5 est reliée à la sortie d'un circuit de mémoire 7, qui peut être, dans le cas le plus simple, un registre. Ce circuit 7 contient au moins une valeur $K_T$, ou critère, représentant le nombre maximum d'impulsions incidentes (sur la borne 1) autorisées pendant un intervalle de temps Ti quelconque de durée T. La sortie de l'additionneur 5 est reliée à un circuit de mémoire 8 mémorisant au moins une valeur de consigne $V_c$. Dans le cas le plus simple, le circuit 8 peut être un registre. La sortie du circuit 8 est reliée à la deuxième entrée du comparateur 6.

La sortie du circuit 6 est reliée à un circuit de mémoire 9. Dans le cas le plus simple, le circuit 9 est une bascule. La sortie inversée du circuit 9 est reliée à la deuxième entrée de la porte 2.

Considérons un intervalle de temps courant Ti. Soit Ni le nombre d'impulsions arrivant à l'entrée 1 pendant cet intervalle de temps. Deux cas peuvent se présenter :

a) $Ni \leq K_T$ : les Ni impulsions doivent être intégralement transmises à la sortie 3,

b) $Ni > K_T$ : les $K_T$ premières impulsions parmi les Ni impulsi incidentes doivent parvenir à la sortie 3, puis plus aucune impulsion ne doit parvenir à la sortie 3 jusqu'à la fin de l'intervalle Ti.

Ce procédé est mis en oeuvre par le circuit décrit ci-dessus de la façon suivante.

Les impulsions incidentes sont transmises à la sortie 3 tant que la porte 2 n'est pas bloquée. Chaque impulsion ainsi transmise incrémente le compteur 4 d'une unité. Au début d'une période Ti, le compteur 4 se trouve, du fait des comptages antérieurs à une valeur initiale Nt. On charge alors dans la mémoire 8 la quantité $V_c = Nt + K_T$ obtenue en additionnant par le circuit 5 le contenu du compteur 4 et de la mémoire 7. Cette quantité va servir de valeur de consigne jusqu'à la fin de l'intervalle Ti. Pendant tout le reste de l'intervalle Ti, on compare dans 6, avec une périodicité t, l'état du compteur 4 au contenu de la mémoire 8. Si on atteint l'égalité, le signal de sortie du comparateur 6 change d'état logique. La mémoire 9 mémorise cet événement et envoie un signal de blocage à la porte 2.

La seule condition requise pour que le compteur 4 ne puisse pas dépasser la valeur de consigne est que l'on choisisse la valeur de t (périodicité de la comparaison dans 6) suffisamment petite pour qu'il ne puisse pas s'y produire plus d'une seule impulsion incidente. On peut également traiter le signal incident (juste en amont de l'entrée 1) à l'aide d'un circuit logique permettant de masquer toutes les impulsions postérieures à la première dans chaque période t. Un tel circuit est évident à réaliser pour l'homme de l'art, et ne sera pas décrit en détail.

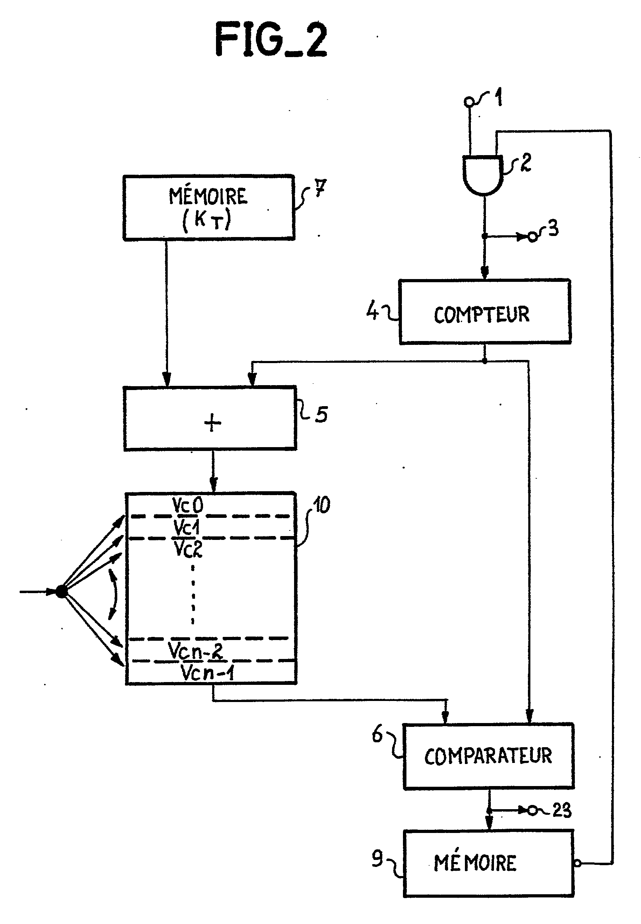

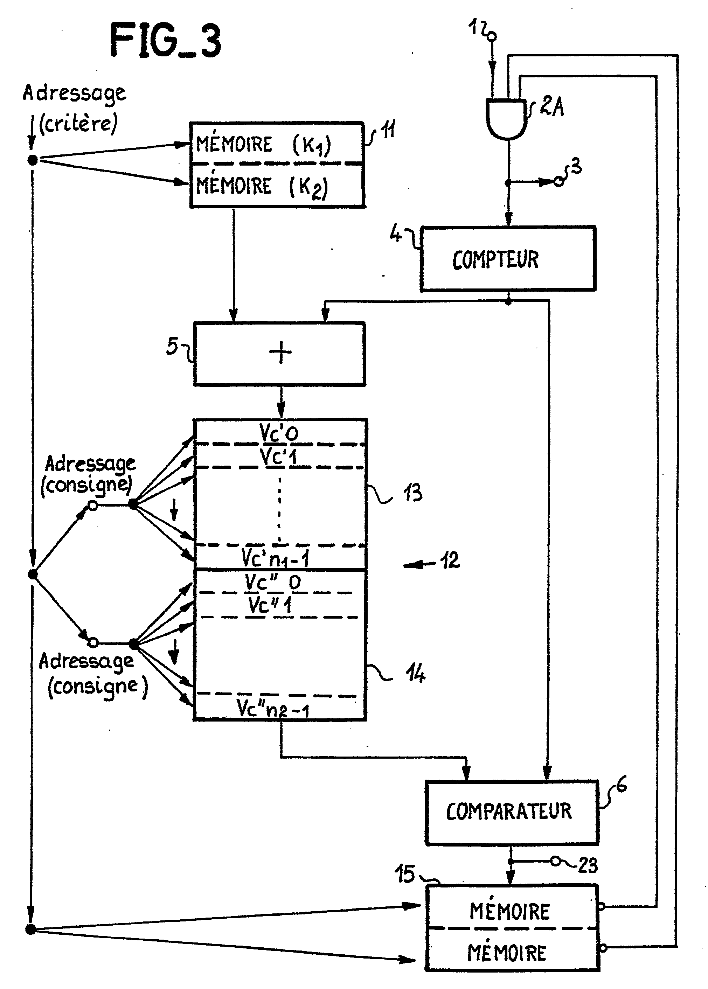

Le circuit représenté sur la figure 2 est un perfectionnement de celui de la figure 1. Dans le circuit de la figure 1, les résultats obtenus peuvent dépendre de l'instant d'origine choisi pour le peigne des intervalles de temps Ti. Une pointe de densité temporelle des impulsions incidentes peut être masquée par suite de son partage entre deux intervalles de temps consécutifs Tj, Tj+1. Pour éviter un tel inconvénient, on utilise le mode de réalisation représenté sur la figure 2. Sur cette figure 2, comme sur les figures 3 à 6, les éléments similaires à ceux de la figure 1 sont affectés des mêmes références numériques. Dans le mode de réalisation de la figure 2, une mémoire 10 remplace le registre 8 du circuit de la figure 1. Cette mémoire 10 comporte $\underline{n}$ "cases" mémoire (équivalant chacune à un registre), avec $n = T/t$. A chaque période ti, on compare l'état du compteur 4 à la valeur de consigne $VC_i$ (c'est-à-dire l'une des n valeurs de consigne $VC_0$ à $VC_{n-1}$ de la mémoire 10), correspondant à la case $\underline{i}$. Ensuite, le contenu de la case $\underline{i}$ est réactualisé avec la valeur $Ni + K_T$, Ni étant l'état du compteur 4 à la fin du temps ti. Les $\underline{n}$ cases, ou adresses, de la mémoire 10 sont explorées cycliquement, et une même case $\underline{m}$ est examinée selon une périodicité $nt = T$, qui est bien l'intervalle de temps de référence correspondant à $K_T$. Les intervalles de temps de référence des cases de mémoire consécutives sont décalés de $\underline{t}$. Dans un mode de réalisation, on utilise en tant que mémoire 10 une mémoire vive, d'une capacité de 64 octets.

Le circuit de la figure 3 représente une première généralisation de celui de la figure 2 permettant de mettre en oeuvre la fonction du circuit de la figure 2 pour une pluralité d'intervalles de temps de référence T associés à une pluralité de valeurs $K_T$. Pour simplifier le dessin et les explications, on a limité à deux le nombre d'intervalles de temps de référence, à savoir T1 et T2, mais il est bien entendu que leur nombre peut être beaucoup plus grand. A ces deux intervalles de temps, on associe deux valeurs $K_T$, à savoir K1 et K2, avec K2 > K1.

Les valeurs K1 et K2 sont mémorisées dans une mémoire de critères 11. Du fait que l'on doit stocker, dans le cas présent, deux jeux de valeurs de consigne correspondant aux deux critères (T1, K1) et (T2, K2), on utilise une mémoire 12 de valeurs de consigne plus importante que précédemment. Cette mémoire 12 comporte deux ensembles de mémorisation 13, 14 mémorisant respectivement les n1 et n2 ensembles de valeurs de consigne ($Vc'_0$ à $Vc'_{n1-1}$) et ($Vc''_0$ à $Vc''_{n2-1}$). Bien entendu, ces deux ensembles de mémorisation ne sont pas forcément distincts : on peut utiliser un seul circuit de mémoire dont on commande l'adressage de façon à obtenir, à un instant quelconque d'adressage, une valeur de consigne dans chacun de ces deux ensembles de valeurs. Les nombres n1 et n2 sont tels que $n1 = T1/t$ et $n2 = T2/t$. Etant donné que l'on a affaire ici à deux cas de fonctionnement, la sortie du comparateur 6 est reliée à une mémoire 15 à deux "cases" stockant les résultats de comparaison correspondant à ces deux cas. Les sorties inversées de ces deux cases sont reliées chacune à une entrée d'une porte ET 2A à trois entrées remplaçant la porte 2. Il est bien évident que la fonction logique accomplie par la porte 2A pourrait être réalisée par toute autre variante ou moyen équivalent sans sortir du cadre de la présente invention.

Le circuit de la figure 3 fonctionne en multiplex temporel, les deux jeux de valeurs de consigne étant adressés alternativement. Le temps élémentaire $\underline{t}$ doit être un diviseur commun de T1 et T2. Le nombre de "cases" de mémoire requis pour la mémoire 12 est $n = n1 + n2 = (T1 + T2)/t$.

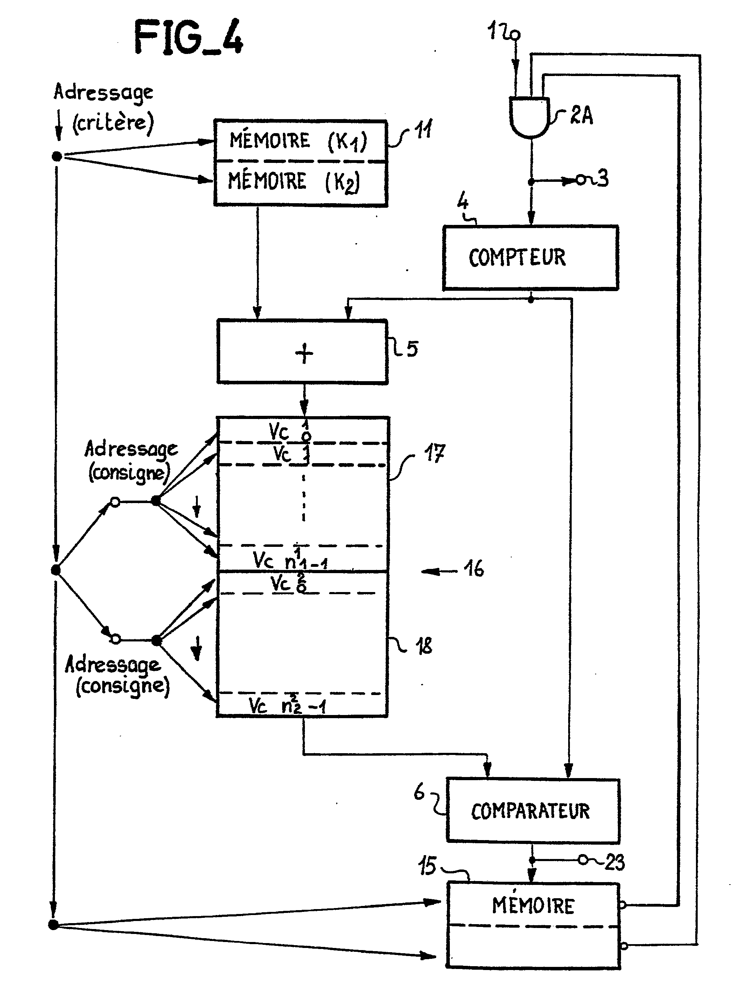

Si l'un des deux intervalles de temps de référence, par exemple T2, est beaucoup plus grand que l'autre (T1), l'invention prévoit qu'il n'est pas nécessaire de réactualiser aussi souvent les valeurs de consigne du critère (T2, K2) que celles correspondant au critère (T1, K1). On utilise alors le circuit de la figure 4, dans lequel, par rapport à celui de la figure 3, on utilise une mémoire 16 de valeurs de consigne à la place de la mémoire 12. Dans cette mémoire 16, la capacité de l'ensemble de mémorisation correspondant à T2 n'est pas augmentée dans les mêmes proportions que T2. On a choisi ici, à titre de mode de réalisation préférentiel, mais non limitatif, $n1 = T1/t$ et $n2 = T2/T1$. Les tests des critères (T1, K1) et (T2, K2) se font à chaque intervalle de temps t. En ce qui concerne le premier ensemble de mémorisation 17, relatif à T1 (n1 valeurs de consigne $Vc_0^1$ à $Vc_{n1}^1$), une même adresse ("case" mémoire) est testée et réactualisée au bout d'un temps T1, c'est-à-dire après chaque série de n1 temps élémentaires t.

En ce qui concerne l'ensemble de mémorisation 18 contenant les n2 valeurs de consigne relatives à T2 (n2 valeurs de $V_{c0}^2$ à $V_{cn2^1_1}$), chacune des n2 cases de mémoire est utilisée selon le cycle suivant :
- n1 lectures dans une case donnée avec la période t
- écriture dans cette case de la valeur de consigne réactualisée
- passage à la case suivante.

La réactualisation d'une telle case a donc lieu avec une périodicité de n1 × n2 × t = T2.

Le comptage par le compteur 4 et la présentation des impulsions incidentes sur la sortie 3 sont arrêtés dès que l'une quelconque des valeurs de consigne en vigueur est dépassée.

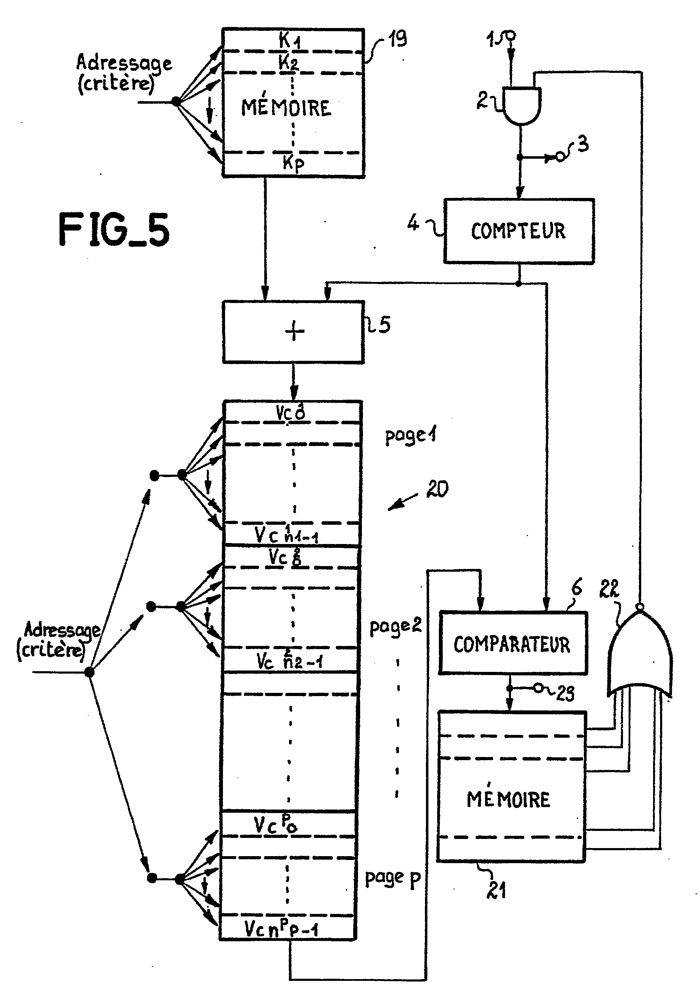

On a représenté sur la figure 5 le cas le plus général du circuit de l'invention. On stocke dans une mémoire 19, p critères K1 à Kp. La mémoire 20 de valeurs de consigne comporte p ensembles de mémorisation (ou "pages") dans chacun desquels sont stockées les valeurs de consigne correspondant à chacun des p critères. Le comparateur 6 est suivi d'une mémoire 21 à p cases de mémoire reliées chacune à l'une des p entrées d'une porte 22 NON-OU dont la sortie est reliée à la deuxième entrée de la porte 2.

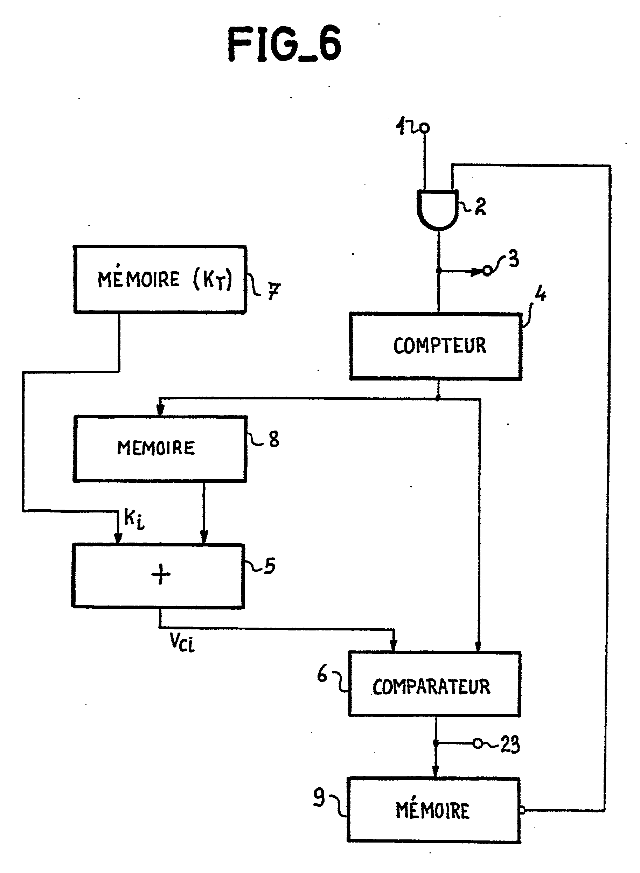

La variante du circuit de l'invention représentée sur la figure 6 diffère des autres modes de réalisation décrits ci-dessus par le fait que l'entrée de la mémoire 8 n'est reliée qu'au compteur 4, l'additionneur 5 étant relié aux sorties de la mémoire 8 et de la mémoire 7. Ainsi, la mémoire 8 est actualisée avec la valeur courante du compteur 4, l'addition avec la constante Ki qui fournit la valeur de consigne $V_{ci}$ ayant lieu juste avant chaque comparaison dans le comparateur 6. Bien entendu, cette variante peut être utilisée dans l'un quelconque des modes de réalisation des figures 1 à 5.

Selon un autre aspect de l'invention, on peut utiliser l'un quelconque des circuits décrits ci-dessus pour commander un circuit de commande automatique de gain. Le franchissement d'un des critères se traduit par un changement de niveau logique à la sortie 23 du comparateur 6. Un circuit fournissant une tension proportionnelle à la fréquence de ces franchissements pourra être utilisé pour engendrer la tension de commande de CAG. Un tel circuit est bien connu de l'homme de l'art et ne sera pas décrit en détail.

## Revendications

1. Procédé de limitation de trafic pour système interrogateur/répondeur, tel qu'un radar secondaire ou un système IFF, dans lequel la limitation du nombre des interrogations prises en compte dans le répondeur est effectuée selon des critères de distribution statistique temporelle, la limitation consistant à compter pendant un intervalle de temps (Ti) de durée déterminée (T), le nombre (Ni) d'interrogations parvenant au répondeur, le procédé étant caractérisé en ce que ledit nombre (Ni) est comparé pendant tout l'intervalle de temps (Ti), et avec une périodicité (t), à une valeur de critère (KT) et en ce que les impulsions incidentes sont bloquées jusqu'à la fin de l'intervalle de temps (Ti) dès que ledit nombre (Ni) a atteint la valeur de critère (KT).

2. Procédé selon la revendication 1, caractérisé par le fait que la limitation consiste à comparer les nombres d'interrogations parvenant au répondeur dans (n) intervalles de temps de durée (T), décalés les uns par rapport aux autres d'un temps (t = T/n), à une même valeur de critère (KT) et à bloquer les interrogations incidentes dès qu'un desdits nombres d'interrogations a atteint la valeur de critère (KT).

3. Procédé selon l'une des revendications 1 et 2, caractérisé par le fait que la limitation consiste à comparer les nombres d'interrogations survenant pendant plusieurs intervalles de temps de durée déterminée (T1, T2...) à plusieurs valeurs de critères (K1, K2...), et à bloquer les interrogations dès que l'une quelconque des valeurs de critères est atteinte, par l'un desdits nombres d'interrogations.

4. Dispositif de limitation de trafic pour système interrogateur/répondeur tel qu'un radar secondaire ou système IFF, le dispositif comportant une porte d'entrée à fonction ET (2), agencée pour recevoir sur une de ses entrées (1) des impulsions représentatives des interrogations parvenant au répondeur, la sortie de cette porte étant reliée d'une part à un compteur (4) ledit dispositif étant caractérisé en ce que la sortie de ladite porte est d'autre part reliée à une sortie (3) d'autorisation de prise en compte d'interrogations, et en ce que le compteur (4) possède une sortie reliée d'une part à un additionneur (5) lui-même relié par ailleurs à une mémoire (7) stockant au moins une valeur de critère, et d'autre part à une première entrée d'un comparateur (6), la sortie de l'additionneur étant reliée à un premier dispositif de mémorisation (8) d'au moins une valeur de consigne liée à la valeur de critère dont la sortie est reliée à une deuxième entrée dudit comparateur, la sortie (23) de ce comparateur étant reliée via un deuxième dispositif de mémorisation (9) à une deuxième entrée de ladite porte ET.

5. Dispositif selon la revendication 4, caractérisé par le fait que plusieurs valeurs de critères étant stockés en mémoire (11, 19) le second dispositif de mémorisation (15, 21) disposé à la sortie du comparateur comporte plusieurs "cases" de mémoire reliées chacune à une entrée correspondante de la porte ET (2A) recevant les impulsions représentatives des interrogations.

6. Dispositif selon la revendication 4, caractérisé par le fait que les différentes "cases" de mémoire sont reliées chacune à une entrée d'une porte à fonction NON-OU (22) dont la sortie est reliée à une entrée de ladite porte ET (2).

7. Dispositif selon l'une des revendications 4 à 6, caractérisé par le fait que le compteur (4) est relié à l'additionneur (5) via le premier dispositif de mémorisation (8) de valeurs de consigne (8), l'autre entrée de l'additionneur (5) étant reliée à la mémoire de valeurs de critère (7), et la sortie de l'additionneur étant alors reliée directement à la deuxième entrée du comparateur (6).

8. Dispositif selon l'une des revendications 4 à 7, caractérisé par le fait que les portes ET (2, 2A) et NON-OU (22) sont remplacées par des circuits accomplissant des fonctions logiques équivalentes.

9. Dispositif selon l'une des revendications 4 à 8, caractérisé par le fait que le dispositif comporte une autre sortie délivrant le complément de tension de ladite sortie d'autorisation (3) et servant à inhiber le répondeur.

10. Dispositif selon l'une des revendications 4 à 9, caractérisé par le fait que la sortie (23) du comparateur (6) est agencée pour être reliée à une entrée de commande automatique de gain du récepteur du répondeur.

## Claims

1. A traffic restriction method for an interrogator/responder system such as a secondary radar or IFF system, in which the restriction of the number of interrogations taken into account in the responder is performed according to statistic time distribution criteria, the restriction consisting in counting during a time interval (Ti) of given duration (T) the number (Ni) of interrogations arriving at the responder, characterized in that the number (Ni) is compared during the entire time interval (Ti) and with a periodicity (t) to a criterion value (KT), and that the incident pulses are inhibited up to the end of the time interval (Ti) as soon as said number (Ni) has reached the criterion value (KT).

2. A method according to claim 1, characterized in that the restriction implies on the one hand the comparison between the numbers of interrogations arriving at the responder in (n) time intervals of duration (T), shifted one with respect to the other by a time (t=T/n), and a common criterion value (KT), and on the other hand, the inhibition of the incident interrogations as soon as one of said numbers of interrogations has reached the criterion value (KT).

3. A method according to one of claims 1 and 2, characterized in that the restriction implies, on the one hand, the comparison between the numbers of interrogations arriving during several time intervals of given duration (T1, T2,...) and several criterion values (K1, K2,...), and, on the other hand, the inhibition of the interrogations as soon as any one of the criterion values has been reached by one of said numbers of interrogations.

4. A traffic restriction device for an interrogator/responder system such as a secondary radar or IFF system, the device comprising an input gate (2) which is realised as an AND gate and arranged to receive on one of its inputs (1) pulses defining interrogations which arrive at the responder, the output of this gate being connected to a counter (4), characterized in that the output of said gate is further connected to an output (3) for allowing the interrogations to be taken into account, and that the counter (4) has an output connected on the one hand to an adder (5) which is itself connected to a memory (7) for storing at least one criterion value, and on the other hand to a first input of a comparator (6), the output of the adder being connected to a first storage device (8) for storing at least one set value associated to the criterion value, the output of said storage device being connected to a second input of the comparator and the output (23) of the comparator being connected via a second storage device (9) to a second input of said AND gate.

5. A device according to claim 4, characterized in that, several criterion values being stored in a memory, the second storage device (15, 21) located at the comparator output comprises several storage cells each connected to a corresponding input of the AND gate (2A) which receives the pulses defining the interrogations.

6. A device according to claim 4, characterized in that the different storage cells are each connected to one input of a NOR gate (22) whose output is connected to an input of said AND gate (2).

7. A device according to one of claims 4 to 6, characterized in that the counter (4) is connected to the adder (5) via the first storage device (8) for storing the set values (8), the other input of the adder (5) being connected to the memory for storing the criterion values (7), and the output of the adder being then directly connected to the second input of the comparator (6).

8. A device according to one of claims 4 to 7, characterized in that the AND gate (2, 2A) and the NOR gate (22) are replaced by circuits realising equivalent logic functions.

9. A device according to one of claims 4 to 8, characterized in that it further comprises an additional output supplying the voltage complement of said output (3) for allowing the interrogations to be taken into account and being intended to inhibit the responder.

10. A device according to one of claims 4 to 9, characterized in that the output (23) of the comparator (6) is arranged for being connected to an automatic gain control input of the receiver in the responder.

## Patentansprüche

1. Verfahren zur Verkehrsbeschränkung für ein Abfrage-Repondersystem, z.B. ein Sekundärradarsystem oder ein IFF-System, in dem die Beschränkung der Anzahl von im Reponder berücksichtigten Abfragen gemäß zeitlich statistischen Verteilkriterien erfolgt, wobei die Beschränkung darin besteht, daß während eines Zeitintervalls (Ti) vorgegebene Dauer (T) die Anzahl (Ni) der am Reponder ankommenden Abfragen gezählt wird, dadurch gekennzeichnet, daß diese Anzahl (Ni) während des ganzen Zeitintervalls (Ti) und mit einer Periodizität (t) mit einem Kriteriumswert (KT) verglichen wird und daß die ankommenden Impulse bis zum Ende des Zeitintervalls (Ti) blockiert werden, sobald die Anzahl (Ni) den Kriteriumswert (KT) erreicht hat.

2. Verfahren nach Anspruch 1, dadurch gekennzeichnet, daß die Beschränkung darin besteht, die Anzahl der am Reponder in (n) Zeitintervallen der Dauer (T) im gegenseitigen Abstand einer Zeit (t=T/n) ankommenden Abfragen mit einem gemeinsamen Kriteriumswert (KT) zu vergleichen und die ankommenden Abfragen zu blockieren, sobald eine der Anzahlen von Abfragen den Kriteriumswert ($K_T$) erreicht hat.

3. Verfahren nach einem der Ansprüche 1 und 2, dadurch gekennzeichnet, daß die Beschränkung darin besteht, die Anzahlen von Abfragen, die während mehrerer Zeitintervalle einer gegebenen Dauer (T1, T2,...) ankommen, mit mehreren Kriteriumswerten (K1, K2,...) zu vergleichen und die Abfragen zu blockieren, sobald irgendeiner der Kriteriumswerte durch eine der Anzahlen von Abfragen erreicht ist.

4. Vorrichtung zur Verkehrsbeschränkung für ein Abfrage-Repondersystem wie z.B. ein Sekundärradar- oder ein IFF-System, wobei die Vorrichtung eingangsseitig ein logisches UND-Tor (2) aufweist, das an einem seiner Eingänge (1) Impulse betreffend die am Reponder ankommenden Abfragen empfängt und der Ausgang dieses Tors an einen Zähler (4) angeschlossen ist, dadurch gekennzeichnet, daß der Ausgang dieses Tors weiter an einen Ausgang (3) zur Genehmigung der Berücksichtigung von Abfragen führt und daß der Zähler (4) einen Ausgang besitzt, der einerseits an einen Addierer (5), der seinerseits mit einem mindestens einen Kriteriumswert speichernden Speicher (7) verbunden ist, und andererseits an einen ersten Eingang eines Komparators (6) angeschlossen ist, wobei der Ausgang des Addierers an eine erste Speichervorrichtung (8) für mindestens einen mit dem Kriteriumswert verknüpften Sollwert führt, deren Ausgang an einen zweiten Eingang des Komparators angeschlossen ist, und wobei der Ausgang (23) dieses Komparators über eine zweite Speichervorrichtung (9) an einen zweiten Eingang des UND-Tors angeschlossen ist.

5. Vorrichtung nach Anspruch 4, dadurch gekennzeichnet, daß im Falle einer Speicherung mehrerer Kriteriumswerte in einem Speicher (11, 19) die zweite Speichervorrichtung (15, 21), die sich am Ausgang des Komparators befindet, mehrere Speicherfächer enthält, die je an einen entsprechenden Eingang des die für die Abfragen repräsentativen Impulse empfangenden UND-Tors (2A) angeschlossen sind.

6. Vorrichtung nach Anspruch 4, dadurch gekennzeichnet, daß die verschiedenen Speicherfächer je an einen Eingang eines ODER-NICHT Tors (22) angeschlossen sind, dessen Ausgang an einen Eingang des UND-Tors (2) führt.

7. Vorrichtung nach einem der Ansprüche 4 bis 6, dadurch gekennzeichnet, daß der Zähler (4) mit dem Addierer (5) über die erste Speichervorrichtung (8) für Sollwerte (8) verbunden ist, während der andere Eingang des Addierers (5) mit einem Speicher für Kriteriumswerte (7) verbunden ist und der Ausgang des Addierers direkt an den zweiten Eingang des Komparators (6) führt.

8. Vorrichtung nach einem der Ansprüche 4 bis 7, dadurch gekennzeichnet, daß das UND-Tor (2, 2A) und das ODER-NICHT Tor (22) durch Schaltkreise ersetzt sind, die äquivalente logische Funktionen besitzen.

9. Vorrichtung nach einem der Ansprüche 4 bis 8, dadurch gekennzeichnet, daß sie einen weiteren Ausgang besitzt, der das Spannungskomplement des Genehmigungsausgangs (3) liefert und zur Blockierung des Reponders dient.

10. Vorrichtung nach einem der Ansprüche 4 bis 9, dadurch gekennzeichnet, daß der Ausgang (23) des Komparators (6) an den Steuereingang zur automatischen Verstärkungsregelung des Reponders angeschlossen ist.

# FIG_1

# FIG_2

FIG_3

# FIG_4

FIG_5

# FIG_6